# FASCICULE DE BREVET EUROPEEN

(11) **EP 2 601 851 B1**
(45) Date de publication et mention de la délivrance du brevet: **05.08.2015**
(21) Numéro de dépôt: 12194495.3
(22) Date de dépôt: 27.11.2012
(51) Int. Cl.: A41D 19/00, G06F 3/044, G06F 3/01

(54) **Gant permettant l'actionnement d'un dispositif tactile de type capacitif**
Handschuh zur Betätigung einer Berührungsvorrichtung vom kapazitiven Typ
Glove for actuating a capacitive touch-sensitive device

(30) Priorité: 09.12.2011 FR 1161433
(43) Date de publication de la demande: 12.06.2013
(73) Titulaire: DECATHLON, 59650 Villeneuve d'Ascq (FR)
(72) Inventeur: Borreau, Sylvain, 59491 Villeneuve d'Ascq (FR)
(74) Mandataire: Sayettat, Julien Christian

(56) Documents cités:
- EP-A1- 0 611 529
- WO-A1-2012/060925
- WO-A2-2010/141574

## Description

L'invention concerne un gant présentant une partie de recouvrement de la paume d'un porteur et au moins un logement de recouvrement d'au moins un doigt dudit porteur.

On connaît des gants dont les logements de doigt présentent une doublure intérieure dans laquelle le doigt est destiné à être disposé, un insert entourant ladite doublure intérieure et une coque extérieure entourant ledit insert voire par example le document EP 0611529.

En particulier, on connaît des gants de ski dans lesquels la coque extérieure est agencée pour assurer une protection de la main du porteur contre les intempéries, l'insert comprend une membrane imperméable et respirante et la doublure intérieure est agencée pour assurer une isolation thermique.

Pour permettre le montage de l'insert entre la doublure intérieure et la coque extérieure, il est connu d'utiliser une pièce de montage présentant un bord proximal associé à la doublure et un bord distal associé à la coque, l'insert étant associé à la pièce de montage entre ses bords proximal et distal.

Avec de tels gants, il est difficile pour le porteur d'actionner un dispositif tactile, notamment un écran tactile de type capacitif équipant un terminal mobile de type smartphone.

En effet, pour actionner un tel dispositif tactile, le porteur doit toucher avec son doigt la surface de l'écran, afin de permettre le transfert de charges électriques dudit doigt audit écran.

Or, un gant de ski tel que décrit ci-dessus, en raison de son imperméabilité et de son isolation thermique, empêche un tel transfert. De ce fait, le porteur est contraint de retirer le gant pour utiliser un terminal pourvu d'un tel dispositif, ce qui va à l'encontre de la protection souhaitée.

Pour pallier à ces inconvénients, on connaît du document WO-2010/141574 un gant dont la coque extérieure comprend une ouverture à travers laquelle s'étend une portion conductrice, le porteur dudit gant appuyant avec son doigt sur ladite partie conductrice pour interagir avec l'écran tactile d'un terminal mobile.

Cependant, cette solution ne donne pas entière satisfaction, en ce que l'ouverture pratiquée dans la coque extérieure pose un problème d'étanchéité et de protection contre le froid.

L'invention vise à perfectionner l'art antérieur en proposant un gant agencé pour permettre une conduction électrique entre l'intérieur et l'extérieur d'au moins un logement de recouvrement d'au moins un doigt du porteur, afin de permettre audit porteur d'actionner avec précision un dispositif tactile de type capacitif tout en protégeant efficacement son doigt contre le froid et les intempéries.

A cet effet, l'invention propose un gant présentant une partie de recouvrement de la paume d'un porteur et au moins un logement de recouvrement d'au moins un doigt dudit porteur, au moins un logement de doigt présentant une doublure intérieure dans laquelle le doigt est destiné à être disposé, un insert entourant ladite doublure intérieure et une coque extérieure entourant ledit insert, ledit logement présentant en outre une pièce de montage de l'insert entre lesdites doublure et coque, ladite pièce de montage présentant un bord proximal associé à la doublure et un bord distal associé à la coque, l'insert étant associé à la pièce de montage entre ses bords proximal et distal, la pièce de montage présentant une extension proximale qui s'étend à l'intérieur de la doublure pour être en contact avec le doigt et une extension distale disposée contre une portée extérieure de la coque, ladite pièce de montage étant agencée pour assurer une conduction électrique entre lesdites extensions proximale et distale afin de permettre l'actionnement d'un dispositif tactile de type capacitif par mise en contact sur lui de l'extension distale par l'intermédiaire du doigt en contact avec l'extension proximale.

D'autres particularités et avantages de l'invention apparaîtront dans la description qui suit, faite en référence aux figures annexées, dans lesquelles :
- la figure 1 représente de façon schématique en coupe longitudinale la partie distale d'un logement de doigt d'un gant selon un mode de réalisation de l'invention ;
- la figure 2 représente de façon schématique en coupe longitudinale la partie distale d'un logement de doigt d'un gant selon un autre mode de réalisation de l'invention ;
- la figure 3a représente de façon schématique et en perspective la doublure interne d'un logement de doigt d'un gant selon l'invention, la figure 3b étant une vue en coupe suivant le plan B-B de la figure 3a ;
- la figure 4a représente de façon schématique et en perspective le montage d'un insert sur la doublure intérieure des figures 3, la figure 4b étant une vue en coupe suivant le plan C-C de la figure 4a ;
- les figures 5 représentent de façon schématique la coque extérieure du logement de doigt d'un gant selon l'invention, respectivement en perspective (figure 5a), en vue de dessus (figure 5b), en vue de face (figure 5c) et en coupe suivant le plan A-A de la figure 5a (figure 5d) ;
- les figures 6 représentent de façon schématique le montage de la coque extérieure des figures 5 sur l'ensemble doublure - insert des figures 4, respectivement avant (figure 6a), pendant (figure 6b) et après (figure 6c) le retournement de ladite coque sur ledit ensemble ;
- les figures 7 représentent de façon schématique la partie distale d'un logement de doigt d'un gant selon un mode de réalisation de l'invention, respectivement en perspective (figure 7a) et en coupe suivant le plan B-B de la figure 7a (figure 7b) ;
- les figures 8 représentent de façon schématique la partie distale d'un logement de doigt d'un gant selon un mode de réalisation de l'invention, respectivement en perspective (figure 8a) et en coupe suivant le plan B-B de la figure 8a (figure 8b) ;
- les figures 9 représentent de façon schématique la partie distale d'un logement de doigt d'un gant selon un mode de réalisation de l'invention, respectivement en perspective (figure 9a) et en coupe suivant le plan B-B de la figure 9a (figure 9b).

En relation avec ces figures, on décrit ci-dessous un gant présentant une partie de recouvrement de la partie de paume d'un porteur et au moins un logement 1 de recouvrement d'au moins un doigt dudit porteur.

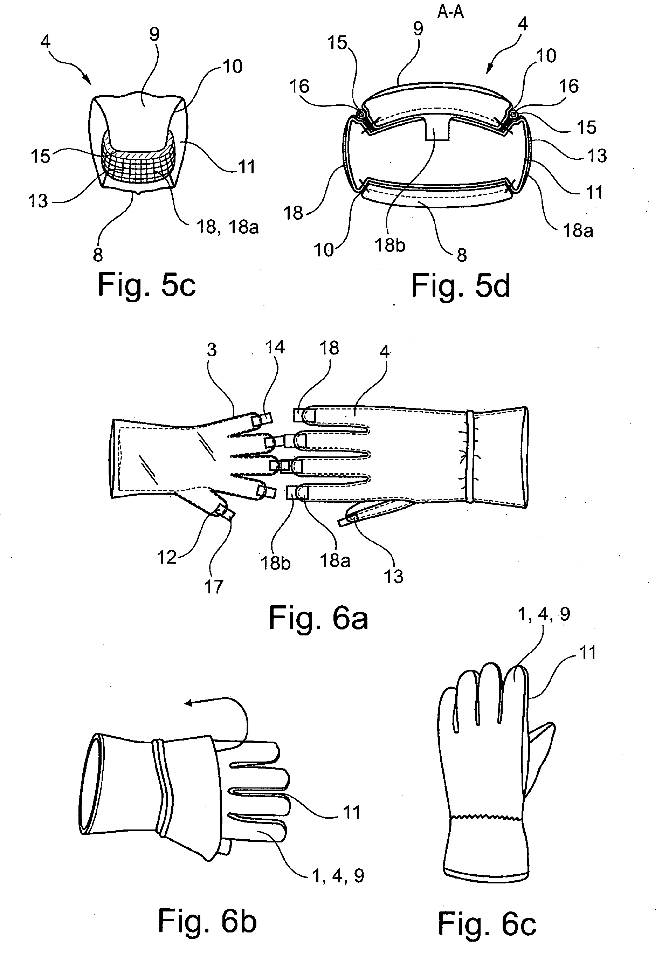

Dans le mode de réalisation représenté sur la figure 6c, le gant présente une partie de recouvrement de la partie de paume qui est prolongée vers l'avant par un logement 1 pour chacun des cinq doigts du porteur.

En variante, le gant peut présenter par exemple un logement à part pour le pouce et un logement commun pour les autres doigts, ou encore deux logements distincts pour respectivement le pouce et l'index et un troisième logement commun pour les autres doigts.

Le gant présente, notamment au niveau du logement de doigt 1, une doublure intérieure 2 dans laquelle le doigt du porteur est destiné à être disposé, un insert 3 entourant ladite doublure intérieure et une coque extérieure 4 entourant ledit insert.

En particulier, lorsque le gant est un gant de ski, la doublure intérieure 2 peut être agencée pour assurer l'isolation thermique, l'insert 3 peut comprendre au moins une membrane imperméable et respirante, par exemple de type GoreTex®, et la coque extérieure 4 peut être agencée pour assurer la protection contre les intempéries tout en conférant au gant une esthétique agréable.

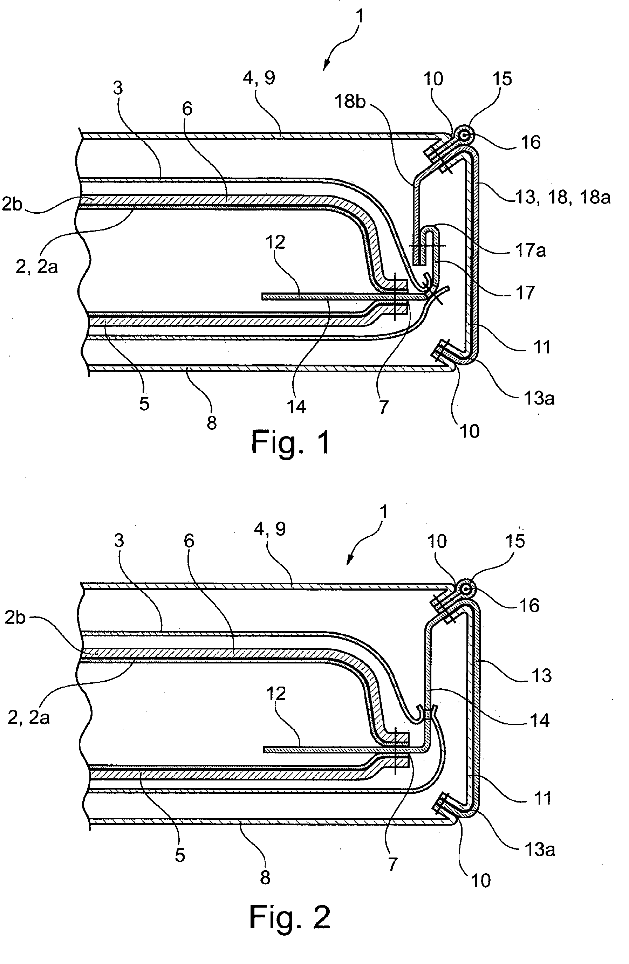

Selon le degré d'isolation thermique souhaité, la doublure intérieure 2 peut présenter plusieurs couches. En relation avec les figures 1 et 2, la doublure intérieure 2 comprend une couche intérieure 2a, par exemple réalisée en un tricot indémaillable gratté ou en polaire, et une couche extérieure 2b, par exemple à base de ouate.

De plus, la doublure intérieure 2 comprend une partie de paume 5 et une partie de dos 6 qui sont associées entre elles, notamment par couture, suivant une bordure distale 7.

De même, la coque extérieure 4 comprend une partie de paume 8 et une partie de dos 9 qui sont associées entre elles, notamment par couture, suivant une bordure distale 10. La coque 4 comprend également une partie de fourchette 11 associée de part et d'autre, notamment par couture, respectivement à la partie de paume 8 et à la partie de dos 9, une bordure distale 10 étant formée entre chacune des parties 8, 9 et la partie de fourchette 11.

Selon le degré de protection contre les intempéries et/ou l'esthétique souhaité(e)(s) pour le gant, les différentes parties 8, 9, 11 de la coque 4 peuvent être réalisées dans des matériaux différents, notamment parmi les tissus, le cuir, la croûte, les non tissés, les tricots indémaillables, la maille, ou encore les films thermoplastiques. Par ailleurs, l'une au moins de ces parties 8, 9, 11, notamment la partie de dos 9, peut comprendre plusieurs couches, par exemple une couche en mousse et une couche en tricot indémaillable très ajouré.

Le logement de doigt 1 présente en outre une pièce de montage de l'insert 3 entre la doublure intérieure 2 et la coque extérieure 4. Pour ce faire, la pièce de montage présente un bord proximal associé à la doublure 2 et un bord distal associé à la coque 4, l'insert 3 étant associé à ladite pièce de montage entre ses bords proximal et distal.

Le gant comprend au moins un logement de doigt 1 agencé pour permettre au porteur d'actionner, par l'intermédiaire du doigt disposé dans ledit logement, un dispositif tactile de type capacitif, par exemple l'écran tactile d'un terminal mobile de type smartphone tel que l'Iphone® ou l'Ipad® commercialisés par Apple®, le smartphone Milestone® commercialisé par Motorola®, ou encore le smartphone Arena® commercialisé par LG®. Ainsi, le porteur n'a pas besoin de retirer le gant et bénéficie donc, lors de l'actionnement du dispositif tactile, de la protection contre le froid et de l'étanchéité conférées par ledit gant.

Pour ce faire, la pièce de montage du logement de doigt 1 concerné présente une extension proximale 12 qui s'étend à l'intérieur de la doublure 2 pour être en contact avec le doigt et une extension distale 13 disposée contre une portée extérieure de la coque 4, ladite pièce de montage étant en outre agencée pour assurer une conduction électrique entre les extensions proximale 12 et distale 13 afin de permettre l'actionnement du dispositif tactile de type capacitif par mise en contact sur lui de l'extension distale 13 par l'intermédiaire du doigt en contact avec l'extension proximale 12.

En relation avec les figures, l'extension distale 13 s'étend en regard d'au moins une partie de l'extrémité distale du logement de doigt 1, afin de permettre au porteur d'actionner le dispositif tactile capacitif par l'intermédiaire de l'extrémité du doigt disposé dans ledit logement. Selon une réalisation, l'extension distale 13 peut s'étendre partiellement sur la partie de paume 8 de la coque 4 afin d'améliorer la capacité conductrice.

Selon un mode de réalisation, on peut prévoir d'équiper tous les logements de doigt avec une pièce de montage conductrice. On peut également prévoir de n'équiper que certains logements de doigt 1 avec une pièce de montage conductrice, notamment le logement de pouce et/ou le logement d'index, car ces doigts sont généralement les plus sollicités pour l'actionnement des smartphones. Dans ce cas, les autres logements de doigts peuvent être équipés avec une pièce de montage classique, c'est-à-dire ne présentant pas de propriétés conductrices spécifiques.

Pour pouvoir transmettre des charges électriques, la pièce de montage est réalisée dans un matériau conducteur qui présente de préférence une résistance inférieure à 65 Ohms/cm. Pour ce faire, la pièce de montage peut être réalisée dans un matériau textile conducteur, notamment un tissu à base de polyamide traité avec un greffage d'argent, car ce tissu présente une résistance et une rigidité satisfaisantes et est faiblement allergène.

Pour permettre l'association de la doublure 2 et de l'insert 3, la pièce de montage comprend une languette 14 en matériau conducteur, par exemple un matériau textile tel que décrit ci-dessus. La languette 14 présente l'extension proximale 12 qui s'étend dans la doublure intérieure 2. Par ailleurs, la languette 14 comprend le bord proximal qui est associé, notamment par couture, dans la bordure distale 7 de la doublure intérieure 2.

En outre, la languette 14 traverse l'insert 3 de manière étanche. Pour ce faire, chaque face de la languette 14 est enduite, entre ses deux extrémités et sur au moins 1 cm de longueur, d'un film thermocollant, par exemple à base de polyuréthane, ledit film thermocollant permettant également de conférer à la languette 14 une meilleure résistance à la déchirure. La languette 14 ainsi enduite est alors disposée dans une ouverture pratiquée sur une bordure distale de l'insert 3, ladite ouverture étant ensuite fermée par soudure au moyen du film thermocollant.

En relation avec la figure 2, la languette 14 présente en outre l'extension distale 13 de la pièce de montage, ladite languette s'étendant contre une portée extérieure de la coque 4 disposée en regard de l'extrémité distale du logement de doigt 1 pour permettre l'actionnement du dispositif tactile capacitif.

En particulier, la languette 14 est associée, notamment par couture, dans la bordure distale supérieure 10 formée entre les parties de dos 9 et de fourchette 11. En outre, l'extension distale 13 comprend une extrémité 13a opposée à ladite bordure distale, ladite extrémité étant associée, notamment par couture, dans la bordure distale inférieure 10 formée entre la partie de paume 8 et la partie de fourchette 11. Ainsi, l'extension distale 13 s'étend en regard de la partie de fourchette 11 et recouvre l'extrémité distale du logement de doigt 1.

En variante, l'extension distale 13 peut former partie de recouvrement du doigt entre les parties de paume 8 et de dos 9. Pour ce faire, l'extension distale 13 est associée de part et d'autre respectivement à la partie de paume 8 et à la partie de dos 9 suivant la bordure distale 10.

Pour améliorer la précision des gestes du porteur, le gant comprend en outre un élément de pointage 15 qui est associé dans la bordure distale supérieure 10, ledit élément étant en contact électrique avec la languette 14 et présentant un relief saillant vers l'extérieur du logement de doigt 1.

Pour ce faire, l'élément de pointage 15 est réalisé dans un matériau conducteur, par exemple un matériau textile de même type que celui constituant la languette 14. Par ailleurs, l'élément de pointage 15 est disposé au contact de la languette 14 en étant associé, notamment par couture, dans la bordure distale supérieure 10.

L'élément de pointage 15 représenté comprend un ourlet en relief qui s'étend sur l'arrondi de la bordure distale supérieure 10 et dans lequel une âme 16 peut être disposée. Ainsi, grâce à l'élément de pointage 16, le porteur bénéficie d'une surface de contact réduite, ce qui lui permet d'actionner des zones du dispositif tactile de dimensions réduites, notamment des zones présentant une aire inférieure à 0.5 cm².

En relation avec les figures 1 et 7 à 9, la pièce de montage peut être réalisée en deux parties. Pour ce faire, la pièce de montage comprend une languette 14 qui présente l'extension proximale 12 s'étendant dans la doublure 2, ainsi que le bord proximal qui est associé, notamment par couture, dans la bordure distale 7 de ladite doublure. Dans ce mode de réalisation, la languette 14 présente également un bord distal 17 qui est disposé entre l'insert 3 et la coque 4.

De plus, la pièce de montage comprend un empiècement 18 réalisé en matériau conducteur, par exemple un matériau textile de même type que celui constituant la languette 14, ledit empiècement étant associé au bord distal 17 et présente l'extension distale 13. En outre, l'empiècement 18 présente un bord distal supérieur qui est associé, notamment par couture, dans la bordure distale supérieure 10, ainsi qu'un bord distal inférieur qui est associé, notamment par couture, dans la bordure distale inférieure 10.

De même, pour améliorer la précision des gestes du porteur, le gant représenté sur la figure 1 comprend un élément de pointage 15 tel que décrit ci-dessus, ledit élément étant associé, notamment par couture, dans la bordure distale supérieure 10, où il est en contact électrique avec l'empiècement 18.

La réalisation de la pièce de montage en deux parties 14, 18 permet de faciliter le montage du gant, notamment en ce qu'il peut être effectué en deux temps : d'abord le montage de l'ensemble doublure 2 - insert 3 et de l'ensemble empiècement 18 - coque extérieure 4, puis l'association desdits ensembles entre eux.

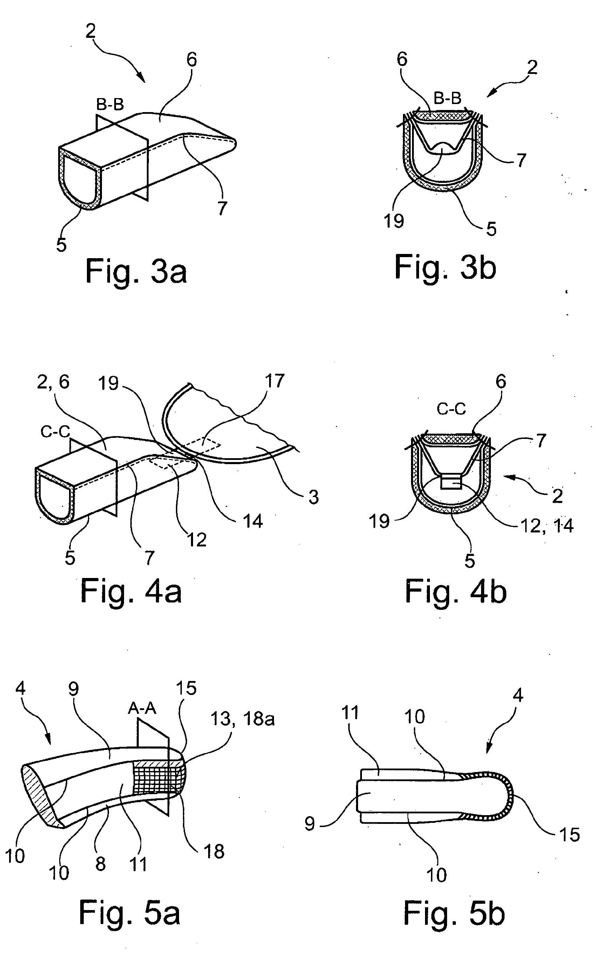

Pour ce faire, en relation avec les figures 5, l'empiècement 18 présente une partie arrondie 18a formant l'extension distale 13 en regard de l'extrémité distale du logement de doigt 1 et qui est associée par couture dans les bordures distales 10 de la coque extérieure 4. Par ailleurs, l'empiècement 18 présente un appendice 18b d'association à la languette 14.

En relation avec les figures 4, pour monter l'ensemble doublure 2 - insert 3, on dispose l'extension proximale 12 de la languette 14 dans une ouverture 19 pratiquée sur la bordure distale 7 de ladite doublure, puis on ferme ladite ouverture, par exemple par couture.

En particulier, l'ouverture 19 est réalisée lors de l'association de la partie de paume 5 et de la partie de dos 6 de la doublure 2, par exemple en laissant sur la bordure distale 7 une zone libre de tout point de couture.

En outre, pour assurer un bon contact entre l'extension proximale 12 et le doigt destiné à être disposé dans la doublure 2, ladite extension proximale peut présenter une longueur comprise entre 2 et 3 cm.

Lorsque la doublure intérieure 2 et l'insert 3 ont été associés au moyen de la languette 14, on retourne l'insert 3 sur la doublure 2.

En relation avec les figures 6, pour associer l'ensemble doublure 2 - insert 3 avec l'ensemble empiècement 18 - coque 4, on dispose le bord distal 17 de la languette 14, qui est saillant de l'ensemble doublure 2 - insert 3, au contact de l'appendice 18b de l'empiècement 18, puis on associe ladite languette et ledit appendice, par exemple par couture.

En outre, le bord distal 17 de la languette 14 présente un repli de renforcement 17a sur lequel l'appendice 18b est associé, ce qui permet d'améliorer la tenue mécanique de ladite association en garantissant la conductivité de l'empiècement 18.

Pour ce faire, on replie le bord distal 17 de la languette 14 sur lui-même, puis on associe par couture l'appendice 18b sur le repli 17a ainsi formé. Par ailleurs, pour éviter la détérioration de l'insert 3, l'association par couture du repli 17a et de l'appendice 18b peut être réalisée à environ 5 mm de la zone d'association entre ledit insert et la languette 14.

Lorsque les ensembles doublure 2 - insert 3 et empiècement 18 - coque 4 ont été associés au moyen de la pièce de montage, on retourne la coque 4 sur l'ensemble doublure 2 - insert 3, afin d'obtenir un gant présentant au moins un logement de doigt 1 tel que représenté sur la figure 1.

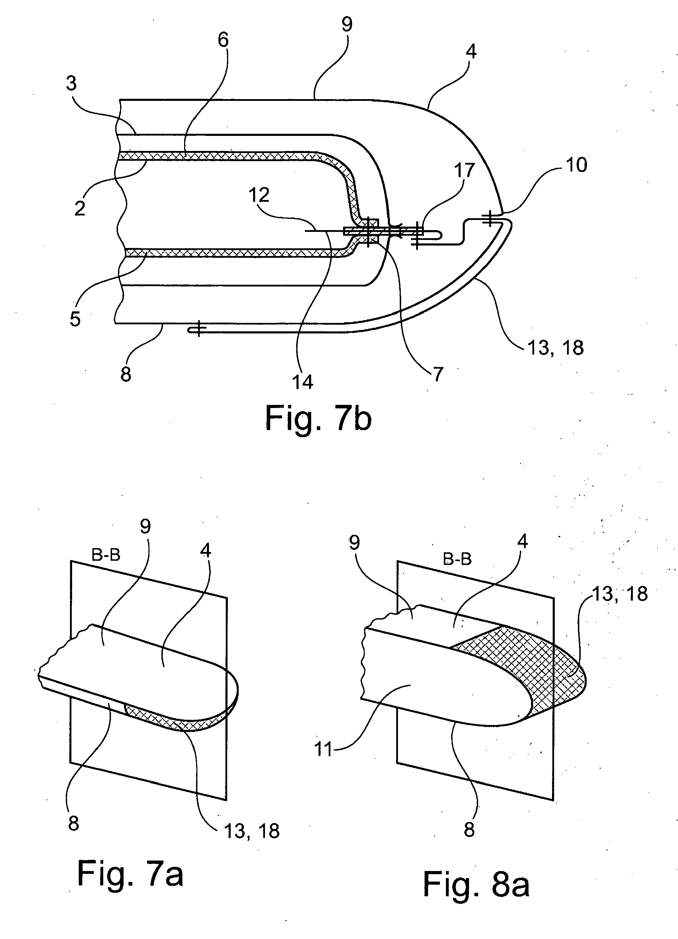

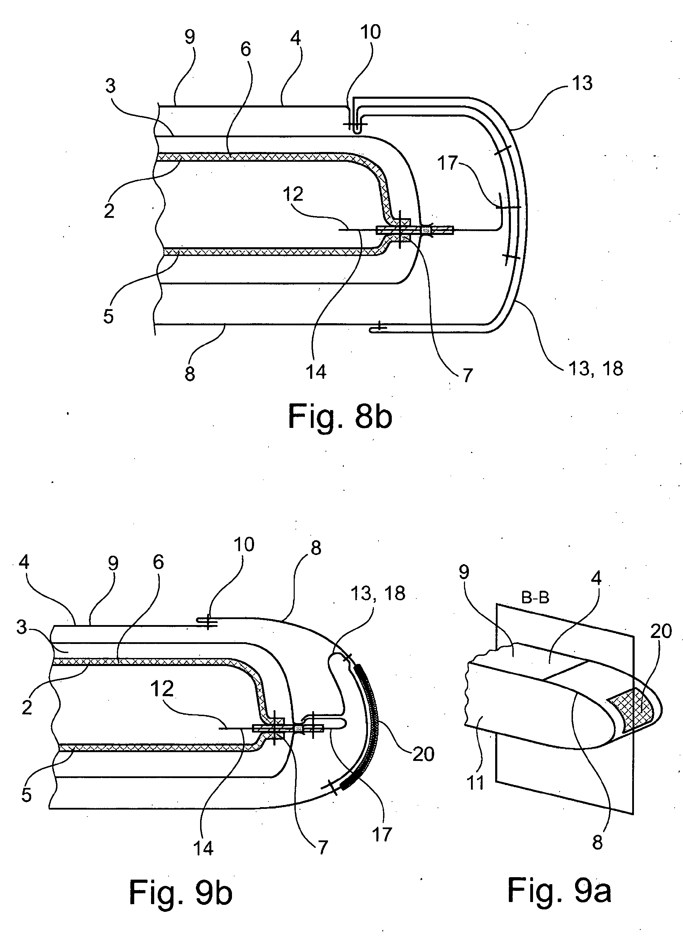

En relation avec les figures 7, l'empiècement 18 s'étend en regard de la partie de paume 8 en étant associé dans la bordure distale 10 et sur ladite partie de paume. Les figures 8 montrent un autre mode de réalisation dans lequel l'empiècement 18 comprend une partie intérieure qui est associée dans la partie de paume 8 jusqu'à la bordure distale 10 et une partie extérieure disposée en regard de l'extrémité distale de la partie de paume 8 en étant associée à elle.

Dans le mode de réalisation représenté sur les figures 9, l'extrémité distale de la partie de paume 8 est pourvue d'une broderie 20 réalisée en fil conducteur, l'empiècement 18 étant associé dans ladite partie de paume en regard de ladite broderie pour être en contact électrique avec elle.

## Revendications

1. Gant présentant une partie de recouvrement de la paume d'un porteur et au moins un logement (1) de recouvrement d'au moins un doigt dudit porteur, au moins un logement (1) de doigt présentant une doublure intérieure (2) dans laquelle le doigt est destiné à être disposé, un insert (3) entourant ladite doublure intérieure et une coque extérieure (4) entourant ledit insert, ledit logement présentant en outre une pièce de montage de l'insert entre lesdites doublure et coque, ladite pièce de montage présentant un bord proximal associé à la doublure (2) et un bord distal associé à la coque (4), l'insert (3) étant associé à la pièce de montage entre ses bords proximal et distal, ledit gant étant **caractérisé en ce que** la pièce de montage présente une extension proximale (12) qui s'étend à l'intérieur de la doublure (2) pour être en contact avec le doigt et une extension distale (13) disposée contre une portée extérieure de la coque (4), ladite pièce de montage étant agencée pour assurer une conduction électrique entre lesdites extensions proximale et distale afin de permettre l'actionnement d'un dispositif tactile de type capacitif par mise en contact sur lui de l'extension distale (13) par l'intermédiaire du doigt en contact avec l'extension proximale (12).

2. Gant selon la revendication 1, **caractérisé en ce que** l'insert (3) comprend au moins une membrane imperméable et respirante.

3. Gant selon la revendication 1 ou 2, **caractérisé en ce que** l'extension distale (13) s'étend en regard d'au moins une partie de l'extrémité distale du logement (1) de doigt.

4. Gant selon l'une quelconque des revendications 1 à 3, **caractérisé en ce que** la doublure (2) comprend une partie de paume (5) et une partie de dos (6) qui sont associées entre elles suivant une bordure distale (7), le bord proximal de la pièce de montage étant associé dans ladite bordure distale.

5. Gant selon l'une quelconque des revendications 1 à 4, **caractérisé en ce que** la coque (4) comprend une partie de paume (8) et une partie de dos (9) qui sont associées entre elles suivant une bordure distale (10), le bord distal de la pièce de montage étant associé dans ladite bordure distale.

6. Gant selon la revendication 5, **caractérisé en ce que** la coque (4) comprend une partie de fourchette (11) associée de part et d'autre respectivement à la partie de paume (8) et à la partie de dos (9), la bordure distale (10) étant formée entre l'une des parties de dos (9) ou de paume (8) et la partie de fourchette (11).

7. Gant selon la revendication 6, **caractérisé en ce que** l'extension distale (13) comprend une extrémité (13a) opposée à la bordure distale (10), ladite extrémité étant associée entre la partie de fourchette (11) et l'autre des parties de paume (8) ou de dos (9) afin que ladite extension distale s'étende en regard de ladite partie de fourchette.

8. Gant selon la revendication 5, **caractérisé en ce que** l'extension distale (13) est associée de part et d'autre respectivement à la partie de paume (8) et à la partie de dos (9) suivant la bordure distale (10), ladite extension distale formant partie de recouvrement du doigt entre lesdites parties de paume et de dos.

9. Gant selon l'une quelconque des revendications 5 à 8, **caractérisé en ce que** l'extension distale (13) s'étend partiellement sur la partie de paume (8) de la coque (4).

10. Gant selon l'une quelconque des revendications 5 à 9, **caractérisé en ce qu'il** comprend en outre un élément de pointage (15) qui est associé dans la bordure distale (10), ledit élément étant en contact électrique avec la pièce de montage et présentant un relief saillant vers l'extérieur du logement (1) de doigt.

11. Gant selon la revendication 10, **caractérisé en ce que** l'élément de pointage (15) comprend un ourlet en relief.

12. Gant selon l'une quelconque des revendications 1 à 11, **caractérisé en ce que** la pièce de montage comprend une languette (14) en matériau conducteur qui présente l'extension proximale (12).

13. Gant selon la revendication 12, **caractérisé en ce que** la languette (14) présente un bord distal (17) qui est disposé entre l'insert (3) et la coque (4), la pièce de montage comprenant en outre un empiècement (18) en matériau conducteur qui est associé audit bord, ledit empiècement présentant l'extension distale (13).

14. Gant selon la revendication 13, **caractérisé en ce que** le bord distal (17) de la languette (14) présente un repli (17a) de renforcement sur lequel l'empiècement (18) est associé.

15. Gant selon la revendication 13 ou 14, **caractérisé en ce que** l'empiècement (18) comprend un appendice (18b) d'association à la languette (14) et une partie arrondie (18a) formant extension distale (13).

## Patentansprüche

1. Handschuh, der einen Abdeckungsteil der Handfläche eines Trägers und mindestens eine Abdeckungsaufnahme (1) mindestens eines Fingers des Trägers aufweist, mindestens eine Fingeraufnahme (1), die ein Innenfutter (2) aufweist, in dem der Finger angeordnet werden soll, einen Einsatz (3), der das Innenfutter umgibt, und eine äußere Schale (4), die den Einsatz umgibt, wobei die Aufnahme außerdem ein Montageteil des Einsatzes zwischen dem Futter und der Schale aufweist, wobei das Montageteil einen proximalen Rand aufweist, der mit dem Futter (2) verbunden ist, und einen distalen Rand, der mit der Schale (4) verbunden ist, wobei der Einsatz (3) mit dem Montageteil zwischen seinem proximalen und distalen Rand verbunden ist, Handschuh **dadurch gekennzeichnet, dass** das Montageteil eine proximale Erweiterung (12) aufweist, die sich im Inneren des Futters (2) erstreckt, um mit dem Finger in Berührung zu sein, und eine distale Erweiterung (13), die gegen eine äußere Auflage der Schale (4) angeordnet ist, wobei das Montageteil eingerichtet ist, um eine elektrische Leitung zwischen der proximalen und distalen Erweiterung sicherzustellen, um das Betätigen einer taktilen Vorrichtung des kapazitiven Typs durch Herstellen des Kontakts der distalen Erweiterung (13) auf ihr über den Finger in Kontakt mit der proximalen Erweiterung (12) zu erlauben.

2. Handschuh nach Anspruch 1, **dadurch gekennzeichnet, dass** der Einsatz (3) mindestens eine undurchlässige und atmende Membran umfasst.

3. Handschuh nach Anspruch 1 oder 2, **dadurch gekennzeichnet, dass** sich mindestens ein Teil der distalen Erweiterung (13) gegenüber mindestens einem Teil des distalen Endes der Fingeraufnahme (1) erstreckt.

4. Handschuh nach einem der Ansprüche 1 bis 3, **dadurch gekennzeichnet, dass** das Futter (2) einen Handflächenteil (5) und einen Rückenteil (6) umfasst, die miteinander entlang eines distalen Rands (7) verbunden sind, wobei der proximale Rand des Montageteils mit dem distalen Rand verbunden ist.

5. Handschuh nach einem der Ansprüche 1 bis 4, **dadurch gekennzeichnet, dass** die Schale (4) einen Handflächenteil (8) und einen Rückenteil (9) umfasst, die miteinander entlang eines distalen Rands (10) verbunden sind, wobei der distale Rand des Montageteils in dem distalen Rand verbunden ist.

6. Handschuh nach Anspruch 5, **dadurch gekennzeichnet, dass** die Schale (4) einen Gabelteil (11) umfasst, der zu beiden Seiten jeweils mit dem Handflächenteil (8) und dem Rückenteil (9) verbunden ist, wobei der distale Rand (10) zwischen dem Rückenteil (9) oder dem Handflächenteil (8) und dem Gabelteil (11) ausgebildet ist.

7. Handschuh nach Anspruch 6, **dadurch gekennzeichnet, dass** die distale Erweiterung (13) ein Ende (13a) umfasst, das dem distalen Rand (10) gegenüber liegt, wobei das Ende zwischen dem Gabelteil (11) und dem anderen des Handflächenteils (8) oder Rückenteils (9) verbunden ist, so dass sich die distale Erweiterung gegenüber dem Gabelteil erstreckt.

8. Handschuh nach Anspruch 5, **dadurch gekennzeichnet, dass** die distale Erweiterung (13) zu beiden Seiten jeweils mit dem Handflächenteil (8) und dem Rückenteil (9) entlang des distalen Rands (10) verbunden ist, wobei die distale Erweiterung einen Abdeckungsteil des Fingers zwischen dem Handflächenteil und dem Rückenteil bildet.

9. Handschuh nach einem der Ansprüche 5 bis 8, **dadurch gekennzeichnet, dass** sich die distale Erweiterung (13) zum Teil auf dem Handflächenteil (8) der Schale (4) erstreckt.

10. Handschuh nach einem der Ansprüche 5 bis 9, **dadurch gekennzeichnet, dass** er außerdem ein Zeigeelement (15) umfasst, das in dem distalen Rand (10) verbunden ist, wobei das Element in elektrischem Kontakt mit dem Montageteil ist und ein Relief aufweist, das zu dem Äußeren der Fingeraufnahme (1) vorsteht.

11. Handschuh nach Anspruch 10, **dadurch gekennzeichnet, dass** das Zeigeelement (15) einen Reliefsaum umfasst.

12. Handschuh nach einem der Ansprüche 1 bis 11, **dadurch gekennzeichnet, dass** das Montageteil eine Lasche (14) aus leitendem Werkstoff umfasst, die eine proximale Erweiterung (12) aufweist.

13. Handschuh nach Anspruch 12, **dadurch gekennzeichnet, dass** die Lasche (14) einen distalen Rand (17) aufweist, der zwischen dem Einsatz (3) und der Schale (4) angeordnet ist, wobei das Montageteil außerdem ein Einsatzstück (18) aus leitendem Werkstoff umfasst, das mit dem Rand verbunden ist, wobei das Einsatzstück die distale Erweiterung (13) aufweist.

14. Handschuh nach Anspruch 13, **dadurch gekennzeichnet, dass** der distale Rand (17) der Lasche (14) einen Verstärkungseinschlag (17a) aufweist, auf dem das Einsatzstück (18) verbunden ist.

15. Handschuh nach Anspruch 13 oder 14, **dadurch gekennzeichnet, dass** das Einsatzstück (18) einen Ansatz (18b) zum Verbinden mit der Lasche (14) und einen gerundeten Teil (18a), der die distale Erweiterung (13) bildet, umfasst.

## Claims

1. Glove having a portion for covering the palm of a wearer and at least one housing (1) for covering at least one finger of said wearer, at least one housing (1) for a finger having an interior lining (2) wherein the finger is intended to be placed, an insert (3) surrounding said interior lining and an outer shell (4) surrounding said insert, said housing further having a mounting part of the insert between said lining and shell, said mounting part having a proximal edge associated to the lining (2) and a distal edge associated to the shell (4), the insert (3) being associated to the mounting part between its proximal and distal edges, said glove being **characterised in that** the mounting part has a proximal extension (12) that extends inside the lining (2) to be in contact with the finger and a distal extension (13) placed against an outer range of the shell (4), said mounting part being arranged in order to provide an electric conduction between said proximal and distal extensions in order to allow the actuation of a capacitive touch sensitive device by placing in contact on it the distal extension (13) by the intermediary of the finger in contact with the proximal extension (12).

2. Glove according to claim 1, **characterised in that** the insert (3) comprises at least one waterproof and breathable membrane.

3. Glove according to claim 1 or 2, **characterised in that** the distal extension (13) extends facing at least one portion of the distal end of the finger housing (1).

4. Glove according to any of claims 1 to 3, **characterised in that** the lining (2) comprises a palm portion (5) and a back portion (6) which are associated together along a distal border (7), the proximal edge of the mounting part being associated in said distal border.

5. Glove according to any of claims 1 to 4, **characterised in that** the shell (4) comprises a palm portion (8) and a back portion (9) which are associated together along a distal border (10), the distal edge of the mounting part being associated in said distal border.

6. Glove according to claim 5, **characterised in that** the shell (4) comprises a fork portion (11) associated on either side respectively to the palm portion (8) and to the back portion (9), the distal border (10) being formed between one of the back (9) or palm (8) portions and the fork portion (11).

7. Glove according to claim 6, **characterised in that** the distal extension (13) comprises an end (13a) opposite the distal border (10), said end being associated between the fork portion (11) and the other of the palm (8) or back (9) portions so that said distal extension extends facing said fork portion.

8. Glove according to claim 5, **characterised in that** the distal extension (13) is associated on either side respectively to the palm portion (8) and to the back portion (9) along the distal border (10), with said distal extension forming a portion covering the finger between said palm and back portions.

9. Glove according to any of claims 5 to 8, **characterised in that** the distal extension (13) extends partially over the palm portion (8) of the shell (4).

10. Glove according to any of claims 5 to 9, **characterised in that** it further comprises an element for pointing (15) which is associated in the distal border (10), said element being in electrical contact with the mounting part and having a relief protruding towards the exterior of the finger housing (1).

11. Glove according to claim 10, **characterised in that** the pointing element (15) comprises a hem in relief.

12. Glove according to any of claims 1 to 11, **characterised in that** the mounting part comprises a tab (14) made of conductive material that has the proximal extension (12).

13. Glove according to claim 12, **characterised in that** the tab (14) has a distal edge (17) that is placed between the insert (3) and the shell (4), the mounting part further comprising a yoke (18) made of conductive material which is associated to said edge, said yoke having the distal extension (13).

14. Glove according to claim 13, **characterised in that** the distal edge (17) of the tab (14) has a reinforcement fold (17a) whereon the yoke (18) is associated.

15. Glove according to claim 13 or 14, **characterised in that** the yoke (18) comprises an appendix (18b) for association to the tab (14) and a rounded portion (18a) forming the distal extension (13).
